Europäisches Patentamt

European Patent Office

Office européen des brevets

(11) Publication number: **0 371 599**
**A2**

## (12) EUROPEAN PATENT APPLICATION

(21) Application number: **89310586.6**

(22) Date of filing: **16.10.89**

(51) Int. Cl.5: **C08G 18/10, C08G 18/62,**
**C08G 18/80, C09D 5/03**

(30) Priority: **28.11.88 US 277013**

(43) Date of publication of application:
**06.06.90 Bulletin 90/23**

(84) Designated Contracting States:
**AT BE CH DE ES FR GB GR IT LI LU NL SE**

(71) Applicant: **THE GLIDDEN COMPANY**
**925 Euclid Avenue**
**Cleveland Ohio 44115(US)**

(72) Inventor: **Reising, John**
**37522 Lorie Boulevard**
**Avon Ohio(US)**

(74) Representative: **Johnston, Walter Paul et al**
**Legal Dept: Patents PO Box 6 Bessemer**
**Road**
**Welwyn Garden City Hertfordshire AL7**
**1HD(GB)**

(54) Fluorocarbon powder coating compositions.

(57) A powder coating composition substantially free of organic solvent and water, the coating composition containing a thermosetting polymeric binder comprising:

a) a hydroxyl functional fluorocarbon copolymer of copolymerised monomers comprisisng hydroxy alkyl vinyl ether and fluorolefin, where the fluorocarbon copolymer contains between 1 and 30 mole percent hydroxy alkyl vinyl ether, the fluorocarbon polymer being produced by copolymerising the monomers in the absence of water;

b) a blocked isocyanate which is adapted to co react with and crosslink the functional fluorocarbon copolymer (a) upon heat curing the coating;

c) a hydroxyl functional polymer adapted to co react with the blocked isocyanate (b) which is a hydroxyl functional acrylic copolymer or a hydroxyl functional polyester polymer, the binder comprising on a weight basis between 20% and 86% functional fluorocarbon copolymer (a), up to 60% hydroxyl functional polymer (c) and between 10% and 40% blocked isocyanate (b).

EP 0 371 599 A2

## FLUOROCARBON POWDER COATING COMPOSITIONS

This invention relates to coating compositions and particularly to powder coating compositions based on thermosetting polymeric binders comprising a functional fluorocarbon polymer adapted to be crosslinked with a blocked isocyanate crosslinking resin.

Fluorocarbon polymers dispersed in organic solvents are disclosed in US 3340222 and US 3324069 although such compositions require considerable amounts of organic solvent which cause undesirable solvent emission problems. Aqueous dispersed polyvinylidene fluoride polymers are disclosed in US 4022737 and US 3770685 and US 3679618 while admixtures of aqueous polymers and acrylic polymers are disclosed in US 4141873 and US 4383075. However, dispersion of fluorocarbon polymers into water is difficult and paint films produced by polymeric admixture often produce non-uniform and non-homogenous paint films due to discrete particles of high Tg fluorocarbon polymer dispersed throughout the paint film which can cause premature failure of the paint film as pointed out in US 4383075.

EP-A-301557 discloses a powder coating composition comprising a fluorine containing copolymer having crosslinkable reactive groups and a curing agent such as an isocyanate compound.

It has now been found that solid hydroxyl functional flurocarbon copolymers in combination with other functional polymers can be used as polymeric binders useful in dry powder paint coatings.

According to the present invention there is provided a powder coating composition substantially free of organic solvent and water, the coating composition containing a thermosetting polymeric binder, comprising:

a) a hydroxyl functional fluorocarbon copolymer of copolymerised monomers comprising hydroxy alkyl vinyl ether and fluorolefin, where the fluorocarbon copolymer contains between 1 and 30 mole percent hydroxy alkyl vinyl ether, the fluorocarbon copolymer being produced by copolymerising the monomers in the absence of water;

b) a blocked isocyanate which is adapted to co-react with and crosslink the functional fluorocarbon copolymer (a) upon heat curing the coating;

c) a hydroxyl functional polymer adapted to co-react with the blocked isocyanate (b) which is a hydroxyl functional acrylic copolymer or a hydroxyl functional polyester polymer the binder comprising on a weight basis from 20% to 86% fluorocarbon copolymer (a), up to 60% hydroxyl functional polymer (c) and from 10% to 40% blocked isocyanate (b).

Preferably the binder comprises on a weight basis from 40% to 70% fluorocarbon copolymer (a), up to 45% hydroxyl functional polymer (c) and from 15% to 35% blocked isocyanate (b).

The hydroxyl functional fluorocarbon copolymer (a) and the hydroxyl functional acrylic or polyester polymer (c) are co reactive with the blocked isocyanate (b) to produce highly desirable thermosetting powder coatings which provide protective surface paint films exhibiting considerably enhanced exterior durability as well as improved gloss retention and chalk resistance. Other film integrity properties such as mechanical resilience and salt spray resistance are improved or maintained in comparison with other high quality films based on conventional acrylic or polyester polymers for powder coatings. The use of functional fluorocarbon polymers in powder coatings further eliminates the dispersion problem of solvent or water dispersed coatings and further eliminates dispersion and powder processing difficulties encountered with the use of high Tg, high melt, thermoplastic fluoropolymers in powder coatings.

Referring first to the hydroxyl functional fluorocarbon copolymers (a) such copolymers have a hydroxyl value between 2 and 200, preferably between 5 and 150.

The functional fluorocarbon copolymer is a solid at ambient temperatures and has a softening point or Tg above about 35°C and preferably between 35°C and 50°C with a number average molecular weight between 8,000 and 16,000 and preferably between 10,000 and 14,000 as measured by gel permeation chromatography ASTM D 3016 78, D 3536-76, and D 3593-80.

The hydroxyl functional fluorocarbon copolymers typically comprise copolymerised ethylenically unsaturated monomers containing carbon-carbon double bond unsaturation including minor amounts of hydroxylated vinyl monomers and major amounts of fluorocarbon monomers.

Preferably the reactive hydroxyl functional fluorocarbon copolymer comprises a copolymer of a hydroxyalkyl vinyl ether and a fluorolefin such as tetra or trifluoroethylene. The most preferred fluorocarbon copolymers comprise a terpolymer of alkyl vinyl ether, hydroxyalkyl vinyl ether, and a fluoroalkylene such as tetra- or trifluoroethylene. The structure of the fluorocarbon copolymer chains is believed to be that of a block copolymer of alternating units of trifluoroethylene and vinyl ether with pendant side chain structures containing hydroxyl functionality derived from the hydroxylalkyl vinyl ethers. Preferred fluorocarbon copolymers or terpolymers comprise by mole percent between 30% and 70% fluorolefin and between 30% and 70% alkyl vinyl ether units including hydroxyalkyl vinyl ether units.

2

EP 0 371 599 A2

Preferred fluorolefins include tetra-fluorethylene, trifluoroethylene and chlorotrifluoroethylene.

Preferred alkyl vinyl ethers include linear or branched chain aliphatic alkyl vinyl ethers having from 2 to 8 carbon atoms such as methyl vinyl ether, ethyl vinyl ether, isopropyl vinyl ether, n-butyl vinyl ether, and similar lower alkyl vinyl ethers.

Hydroxy alkyl vinyl ethers are similar alkyl vinyl ethers containing a substituted hydroxyl group on the alkyl chain. Hydroxy vinyl ether units comprise between 1 and 30 mole percent of the hydroxyl functional fluorocarbon copolymer.

Highly desirable fluorocarbon copolymers are terpolymers of alkyl vinyl ether, hydroxyalkyl ether, and trifluoroethylene sold commercially and known as Lumiflon Polymers. A particularly preferred Lumiflon Polymer is LF-200 D as described in European Patent Application 0 186 186.

The particularly preferred hydroxyl functional fluorocarbon copolymers contain copolymerised monomeric units comprising by molar percent between 30% and 70% and preferably between 45% and 48% fluorocarbon monomer, between 1% and 30% and preferably between 2% and 5% hydroxy alkyl vinyl ether monomer, with the balance being alkyl vinyl ether monomer.

Preferred blocked isocyanates are those which become unblocked and activated under heat and at temperatures above the melt temperature of the powder coating composition and which then co-react with the fluorocarbon copolymer (a). Blocked isocyanates useful in the compositions of this invention are derived from a wide variety of isocyanates and/or mixtures thereof. These include, for example, isophorone diisocyanate; 2,4-toluene diisocyanate; 2,6-toluene diisocyanate; alkylene diisocyanates such as 1,4-tetramethylene diisocyanate; 1,6-hexamethylene diisocyanate; 1,12-dodecane diisocyanate; cyclobutane and cyclohexane (1,3- and 1,4-) diisocyanates; phenylene (1,3- and 1,4-) diisocyanate and naphthalene-1,5-diisocyanate.

Preferred isocyanates include isophorone diisocyanate adducts with a polyol such as trimethylolpropane and blocked with caprolactam and a urethdione linked isophorone diisocyanate known as Huls BF 1540.

Suitable blocking agents are those known in the art and include alcohols, phenol, and ketoximes such as acetone oxime. Especially preferred are 2-ethylhexyl alcohol, caprolactam and acetone oxime.

A specific example of a suitable blocked isocyanate is an $\epsilon$ -caprolactam blocked copolymer of trimethylol propane and isophorone diisocyanate available as Cargill P2400 (Cargill is a Trademark).

Non-blocked isocyanate being free from blocking agent and containing a urethdione linkage can be used in combination with a blocked isocyanate.

On a weight basis, the thermosetting polymeric binder of this invention preferably comprises between about 14 and 27 weight parts of blocked isocyanate per 100 weight parts of hydroxy functional flurocarbon copolymer.

Suitable hydroxy functional acrylic copolymers (c) are produced by solvent or fusion polymerisation of ethylenically unsaturated monomers containing carbon-carbon double bond unsaturation including acrylic monomers and hydroxyl functional monomers as well as other ethylenic monomers such as vinyl ester monomers, vinyl halides, vinyl aromatic hydrocarbons, vinyl aliphatic hydrocarbons, vinyl alkyl ethers, allylic monomers and acrylamide monomers.

Acrylic monomers include monomers such as $C_{1-12}$ alkyl esters of acrylic or methacrylic acid as well as aromatic derivatives of acrylic and methacrylic acid. Useful acrylic monomers include, for example, acrylic and methacrylic acid, methyl acrylate and methacrylate, ethyl acrylate and methacrylate, butyl acrylate and methacrylate, propyl acrylate and methacrylate, 2-ethylhexyl acrylate and methacrylate, cyclohexyl acrylate and methacrylate, decyl acrylate and methacrylate, isodecyl acrylate and methacrylate benzyl acrylate and methacrylate. Also useful are various reaction products such as butyl, phenyl and cresyl glycidyl ethers reacted with acrylic and methacrylic acids, hydroxylalkyl acrylates and methacrylates such as hydroxyethyl and hydroxypropyl acrylates and methacrylates, as well as amino acrylates and methacrylates, and acrylic and methacrylic acid.

Hydroxyl functional monomers include hydroxy alkyl acrylates such as 2-hydroxyethyl acrylate and methacrylate, 2-hydroxypropyl acrylate and methacrylate, and similar hydroxy lower alkyl acrylates or methacrylates.

Vinyl esters include vinyl acetate, vinyl propionate, vinyl butyrates, vinyl benzoates, vinyl isopropyl acetates and similar vinyl esters.

Vinyl halides include vinyl chloride, vinyl fluoride, and vinylidene chloride.

Vinyl aromatic hydrocarbons include styrene, methylstyrenes and similar lower alkyl styrenes, chlorostyrene, vinyltoluene, vinylnaphthalene, and divinyl benzene.

Vinyl aliphatic hydrocarbon monomers include alpha olefins such as ethylene, propylene, isobutylene, and cyclohexene as well as conjugated dienes such as 1,3-butadiene, methyl-2-butadiene, 1,3-piperylene, 2,3-dimethylbutadiene, isoprene, cyclopentadiene, and dicyclopentadiene.

3

Vinyl alkyl ethers include methyl vinyl ether, isopropyl vinyl ether, n-butyl vinyl ether, and isobutyl vinyl ether.

On a weight basis, the hydroxyl functional acrylate copolymer comprises copolymerised monomers between 45% and 75% acrylic monomers, between 5% and 35% hydroxyl functional monomers, with the balance being other ethylenically unsaturated monomers.

The acrylic polymer can be produced by bulk polymerisation of ethylenically unsaturated monomers activated by peroxide or azo or other free radical initiators at polymerisation temperatures typically between $70^\circ$ C to $170^\circ$ C and preferably between $120^\circ$ C to $50^\circ$ C.

Typically 0.5 to 2% peroxide initiator is utilised based on the weight of the monomers. Typical polymerisation initiators can include for instance benzoyl peroxide, t-butyl hydroperoxide, tertiary butyl perbenzoate, cumene peroxide and similar peroxide polymerisation catalysts which are preferred; azo initiators such as azo bisisobutyronitrile and dimethylazobisisobutyrate; as well as alkali metal persulfate or ammonium persulfates.

Mercaptans can be added at levels of about 2% to 4% based on the weight of the monomers to provide copolymers of low molecular weight. Mercaptans useful in controlling molecular weight and primarily to produce low molecular weight polymers include for example 2-mercaptoethanol; 1-mercapto-2-propanol; and 2-hydroxyethyl 3-mercaptopropionate.

The number average molecular weight of the hydroxyl functional acrylic copolymer (c) can be between 3,000 and 10,000 as measured by gel permeation chromatography according to ASTM D 3016-72; D3536-76; and D3593-80. The Tg or softening point of the acrylic polymer should be at least $60^\circ$ C as calculated by the Fox equation based on the ratio of specific monomers. The hydroxyl number of the acrylic copolymer is preferably between 30 and 150 as measured in mg KOH/g.

Suitable hydroxyl functional polyester polymers (c) are produced from linear aliphatic type glycols esterified with considerably smaller molar amounts of aromatic dicarboxylic and tricarboxylic acids or acid anhydrides and linear saturated dicarboxylic acid having between 2 and 10 linear carbon atoms such as adipic, azelaic, succinic, glutaric, pimelic, suberic or sebacic acid.

Suitable aromatic dicarboxylic acids or anhydrides include phthalic, isophthalic, terephthalic and tetrahydrophthalic acids or anhydrides. Suitable aromatic tricarboxylic acids anhydrides include trimelletic anhydride.

Preferred and commercially available linear saturated dicarboxylic acids are adipic or azelaic acid.

Suitable glycols include linear aliphatic glycols having 2 to 8 carbon atoms such as 1,3- or 1,4- butylene glycol, 1,6-hexane diol, neopentyl glycol, propylene glycol and similar linear glycols. Suitable ether glycols include diethylene glycol and dipropylene glycol.

The molar excess of the glycol over the molar amounts of aromatic and linear saturated dicarboxylic acid or acid anhydride is between about 10% and 80% and preferably between about 20% and 60%

The polyester polymer preferably comprises on a molar basis between 0.1 and 0.5 moles of aromatic dicarboxylic acid and tricarboxylic acids and 0.5 and 0.1 moles of linear saturated dicarboxylic acid per 1 mole of glycol. Hence, the polyester contains a considerable excess of unreacted hydroxyl groups to provide a hydroxy polyester having a hydroxyl number between 20 and 320 and preferably between 40 and 80.

The glycol can be esterified with up to about 5% by weight of unsaturated dicarboxylic acids or anhydrides including maleic, fumaric or itaconic acids; or monocarboxylic acids such as acetic, propionic, and higher chain aliphatic acids having up to about 8 carbon atoms.

The number average molecular weight of the hydroxy functional polyester polymer can be between 1,000 and 4,000 as measured by gel permeation chromatography. Preferably it is between 2000 and 3000.

The polyester can be produced by solvent or bulk polymerisation although bulk polymerisation is preferred. The raw materials can be charged in bulk and esterification polymerised at temperatures typically between $190^\circ$ C to $240^\circ$ C although moderately higher or lower temperatures can be utilised satisfactorily. An esterification catalyst can be used, typically at less than 1% levels based on charge, such as an organotin compound.

Preferably the composition comprises from 1 to 60% of the hydroxyl functional polymer (c).

The powder coating compositions are used as surface protective coatings applied to substrates as a continuous film for the purpose of decorative appearance as well as protection of the substrate.

According to the present invention there is provided a process for producing a surface coating which comprises the steps of

(i) applying to a substrate a powder coating composition substantially free of organic solvent and water, the powder coating composition containing a thermosetting polymeric binder, comprising;

a) a hydroxyl functional fluorocarbon copolymer of copolymerised monomers comprising hydrox-

4

yalkyl vinyl ether and fluorolefin, where the fluorocarbon copolymer contains between 1 and 30 mole percent hydroxyalkyl vinyl ether, the fluorocarbon copolymer being produced by copolymerising the monomers in the absence of water;

b) a blocked isocyanate which is adapted to co-react and crosslink with the hydroxy functional fluorocarbon copolymer (a) upon heat curing the paint coating;

c) a hydroxyl functional polymer adapted to co-react with the blocked isocyanate which is a hydroxyl functional acrylic copolymer or hydroxyl functional polyester polymer the binder comprising on a weight basis from 20% to 86% fluorocarbon copolymer (a), up to 60% hydroxyl functional polymer (c) and from 10% to 40% of the blocked isocyanate (b), and;

(ii) heating the coated substrate so as to melt the powder and so as to crosslink the composition.

The powder coating compositions ordinarily comprise an organic binder, pigments, and various additives in addition to the thermosetting polymeric binder.

The thermosetting polymeric binder acts as a dispersant for the pigments and functions as a binder for the pigments in the cured or hardened powder coating film. The binder imparts rheological properties to the powder coating and provides adhesion of the powder film to the substrate.

The pigments may be organic or inorganic and functionally contribute to opacity and colour in addition to durability and hardness, although some powder coatings contain little or no opacifying pigments and are described as clear coatings. Pigments ordinarily can include opacifying pigments such as titanium dioxide, zinc oxide, leaded zinc oxide, as well as tinting pigments such as carbon black, yellow oxides, brown oxides, tan oxides, raw and burnt sienna or umber, chromium oxide green, phthalocyanine green, phthalonitrile blue, ultramarine blue, cadmium pigments, chromium pigments, and the like. Filler pigments such as clay, silica, talc, mica, woolastonite, wood flower and the like can be added. Up to about six weight parts and typically between about 3.5 and 4 weight parts of pigment can be combined with one weight part of polymeric binder depending on the adsorption properties of the pigment particles. Pigmented powder coatings typically comprise a pigment to binder ratio of about 1 to 1.

The powder coating compositions are generally made by a process of mixing the ingredients, heating them so that they melt but do not crosslink, extruding them to form a solid ribbon, and then grinding the solid ribbon so as to form a powder.

According to the present invention there is provided a process for producing a powder coating composition substantially free of organic solvent and water, the coating composition containing a thermosetting polymeric binder, comprising:

a) a hydroxyl functional fluorocarbon copolymer of copolymerised monomers comprising hydroxyalkyl vinyl ether and fluorolefin, where the fluorocarbon copolymer contains between 1 and 30 mole percent hydroxyalkyl vinyl ether, the fluorocarbon copolymer being produced by copolymerising said monomers in the absence of water;

b) a blocked isocyanate which is adapted to co-react with and crosslink the functional fluorocarbon copolymer upon heat curing the paint coating;

c) a hydroxyl functional polymer adapted to co-react with the blocked isocyanate which is a hydroxyl functional acrylic copolymer or a hydroxyl polyester polymer, the binder comprising on a weight basis from 20% to 86% fluorocarbon copolymer (a), up to 60% hydroxyl functional polymer (c), and from 10% to 40% of blocked isocyanate (b)

which comprises the steps of mixing components (a),(b) and (c) in a high intensity mixer, extruding the mixture at a temperature above the melting point of the mixture but below the temperature at which the mixture crosslinks, cooling the extrudate and milling the extrudate so as to form a powder.

Typically, the components are thoroughly mixed in a high intensity mixer such as a frustroconical agitator whereby the materials are discharged in a uniform mixture. The high intensity mixer discharges the mixed components to a heated screw extruder wherein the extruder is internally heated. The exit extruder temperature is regulated according to the type of powder paint being produced but generally is between about 90° and 150°C at the heated exit die of the screw fed extruder. The extrudate emerges from the extruder as a ribbon of less than about 2mm thickness which passes onto a water cooled stainless steel conveyer belt whereby the plastic ribbon extrudate fully hardens. The cooled extrudate then passes through a mechanical commuter disposed at the end of the cooled stainless steel belt to efficiently break the fragile brittle ribbon into very small flakes. The small flakes are then discharged onto a cooled mill, such as a hammer mill, to grind the small particles onto powder paint of less than 325 mesh and preferably passing a 200 mesh US standard sieve screen whereupon the powder can be further classified into particle size if desired.

The invention is further illustrated by the following examples wherein all parts are by weight unless otherwise indicated.

## EXAMPLE 1

### A. General Method

Powder paints were made in the following manner to produced the compositions in Table 1.

Solid particles of hydroxyl functional acrylic or polyester polymer (where added) and the hydroxy functional fluorocarbon resin were dry blended together with blocked isocyanate to produce the organic polymeric binder component of the powder paint of this invention. The binder blend was thoroughly and uniformly mixed with the other ingredients by homogenising the binder, pigmentary solids, plasticisers and other components to uniformly blend the resinous binder with the pigmentary solids.

The raw batch ingredients were thoroughly mixed in a high intensity frustroconical agitator mixer whereby the materials were discharged in a uniform mixture. The high intensity mixer discharged the batch components to a heated screw extruder. The extrudate emerged from the extruder as a ribbon of less than about 2mm thickness which was passed onto a water cooled stainless steel conveyor belt whereby the plastic ribbon extrudate fully hardened. The cooled extrudate was then passed through a mechanical commuter discharged at the end of the cooled stainless steel belt to efficiently break the fragile brittle ribbon into very small flakes. The small flakes were then discharged onto a cooled hammer mill, to grind the small particles onto powder paint of less than 325 mesh and passing a 200 mesh US standard sieve screen.

All ingredients in Examples 1-7 were weighed to plus or minus 0.1 gram.

A Welex High Intensity Laboratory Mixer Model 20M was used for premix blending and a mixing time of 1 to 2 minutes was used at 1800 rpm.

A Buss Extruder/Kneader Model PR-46 was used for the meltmix extrusion with the following settings.

Barrel Temp. 110° C
Screw Temp. 32° C
Die Temp 32° C
Screw Speed 100rpm
Feeder Setting 6-8
Extruder Load 4-5 Amps
Extruder Output 30-40 Kg/Hr
Post-Die Processing Chill Rolls

A Micro Pulveriser Type CF with a 0.1 Oval Screen at 14,000 rpm using Liquid Nitrogen was used for grinding.

An Azo Rotary Sieve Cyclone Screener Model E240-B1 with a 140 Mesh Screen was used for sieving.

TABLE 1

| | Ex.1 | Ex.2 | Ex.3 | Ex.4 | Ex.5 | Ex.6 |
|---|---|---|---|---|---|---|
| Hydroxyl Polyester Polymer 1 | 50-54 | 25-27 | – | – | – | – |
| Blocked isocyanate[2] | 8-10 | 8-10 | 10-14 | 10-12 | 8-10 | 8-10 |
| LF200 fluorocarbon copolymer[5] | – | 25-27 | – | 12-14 | 25-27 | 37-39 |
| Johnson SCX800B hydroxyl acrylic polymer[4] | – | – | 48-50 | 36-38 | 23-25 | 10-12 |
| $TiO_2$ White Pigment Dupont R960 | 36-38 | 36-38 | 36-38 | 36-38 | 36-38 | 36-38 |
| Benzoin Outgas Agent | .3-.5 | .3-.5 | .3-.5 | .3-.5 | .3-.5 | .3-.5 |
| Resiflow Flow Agent PL200[5] | .5-.7 | .5-.7 | .5-.7 | .5-.7 | .5-.7 | .5-.7 |

[1]Goodyear VPE 6158 is a hydroxy functional polyester polymer of composition: 40% neopentyl glycol, 55% terephthalic acid and 5% trimellitic anhydride.

[2] Cargill P2400 is a Blocked isocyanate of Composition: E-caprolactam blocked copolymer of trimethylol propane and isophorone diisocyanate.

LF200 is a hydroxyl functional flurocarbon copolymer from [3] Asahi Glass Co.

[4] Johnson SCX800B is a Hydroxyl functional acrylic Copolymer of 30% methyl methacrylate, 20% butyl acrylate, 20% styrene, 10% 2 HEMA, 6% methyl acrylate, 2% methacrylic acid.

[5] Resiflow PL200 Composition: Copolymer of 2-hexyl, ethyl acrylate and butyl acrylate.

Test panels of the above composition in Table 1 were prepared in the following manner:
Test Panels: Cold rolled steel, 24 ga.; Bonderite 1000-iron phosphate pretreatment.
Bake: 20 minutes at 180°C in an electric oven. Film Build: 50 + 10 micron dry film thickness.
Pigmentation: $TiO_2$; PVC = 15%. Pigment to binder ratio = 0.6.

| WOM ASTM G-23 | | | | QUV ASTM D4329 | | | |
|---|---|---|---|---|---|---|---|
| % 60° Gloss Retained | | | | % 60° Gloss Retained | | | |
| 100hrs | 12 | 28 | 40 | 12 | 38 | 45 | 50 |
| Ex.1 | 20 | 12 | 10 | 11 | 8 | - | - |
| Ex.2 | 55 | 32 | 28 | 37 | 42 | - | - |
| Ex.3 | 65 | 13 | 13 | 63 | 26 | 14 | 11 |
| Ex.4 | 77 | 22 | 17 | 79 | 33 | 23 | 19 |
| Ex.5 | 100 | 72 | 52 | 91 | 56 | 50 | 52 |
| Ex.6 | 100 | 77 | 65 | 96 | 68 | 58 | 54 |

Of the Examples, Examples 1 and 3 are comparative, these compositions having no hydroxyl functional fluorocarbon copolymer (a). Examples 2, 4, 5 and 6 are according to the invention.

In addition to improved gloss retention, increasing levels of LF200 improved chalk resistance markedly.

## Claims

1. A powder coating composition substantially free of organic solvent and water, the composition containing a thermosetting polymeric binder, comprising:
a) a hydroxyl functional fluorocarbon copolymer of copolymerised monomers comprising hydroxy alkyl vinyl ether and fluorolefin, where the fluorocarbon copolymer contains between 1 and 30 mole percent hydroxyl alkyl vinyl ether, the fluorocarbon copolymer being produced by copolymerising the monomers in the absence of water;
b) a blocked isocyanate which is adapted to co-react with and crosslink the functional fluorocarbon copolymer (a) upon heat curing the coating;
c) a hydroxyl functional polymer adapted to co-react with the blocked isocyanate (b) which is a hydroxyl

EP 0 371 599 A2

functional acrylic copolymer or a hydroxyl functional polyester polymer
the binder comprising on a weight basis from 20% to 86% functional fluorocarbon copolymer (a), up to 60% hydroxyl functional polymer (c) and from 10% to 40% blocked isocyanate (b).

2. A coating composition as claimed in Claim 1 in which the polymeric binder comprises on a weight basis from 40% to 70% fluorocarbon copolymer (a), up to 45% of hydroxyl functional polymer (c) and from 15 to 35% of blocked isocyanate (b).

3. A coating composition as claimed in Claim 1 or Claim 2 where the hydroxy functional fluorocarbon copolymer comprises on mole percent basis between 30% and 70% fluorocarbon monomer, between 1% and 30% hydroxy alkyl vinyl ether, with the balance being alkyl vinyl ether.

4. A coating composition as claimed in Claim 3 where the alkyl groups on both the alkyl vinyl ether and the hydroxyl alkyl vinyl ether contain between 2 and 8 carbon atoms.

5. A coating composition as claimed in any of Claims 1 to 4 where the fluorocarbon copolymer (a) comprises between 2% and 5% hydroxy alkyl vinyl ether, between 45% and 48% fluorocarbon monomer, with the balance being alkyl vinyl ether.

6. A coating composition as claimed in any of Claims 1 to 5 where the fluorocarbon copolymer (a) has a number average molecular weight between about 8,000 and 16,000.

7. A coating composition as claimed in any of Claims 1 to 6 where the coating is a dry powder having a Tg above about 35°C.

8. A coating composition as claimed in any of Claims 1 to 7 where the blocked isocyanate (b) is adapted to unblock above the Tg of the composition and co-react with the fluorocarbon copolymer (a).

9. A coating composition as claimed in any of Claims 1 to 8 where the blocked isocyanate (b) is a diisocyanate adduct with a polyol which adduct is blocked with caprolactam.

10. A coating composition as claimed in any of Claims 1 to 9 where the blocked isocyanate (b) comprises an adduct of trimethylopropane with a diisocyanate.

11. A coating composition in as claimed in any of Claims 1 to 10 where the blocked isocyanate (b) is blocked with acetone oxime.

12. A coating composition as claimed in any of Claims 1 to 11 where the hydroxyl functional polymer (c) is a low molecular weight linear polyester polymer having a number average molecular weight between 2,000 and 3,000.

13. A coating composition as claimed in any one of Claims 1 to 12 which comprises from 1 to 60% of the hydroxyl functional polymer (c).

14. A process for producing a powder coating composition substantially free of organic solvent and water, the composition containing a thermosetting polymeric binder comprising:
a) a hydroxyl functional fluorocarbon copolymer of copolymerised monomers comprising hydroxy alkyl vinyl ether and fluorolefin, where the fluorocarbon copolymer contains between 1 and 30 mole percent hydroxy alkyl vinyl ether, the fluorocarbon copolymer being produced by copolymerising the monomers in the absence of water;
b) a blocked isocyanate which is adapted to co-react with and crosslink the functional fluorocarbon copolymer (a) upon heat curing the paint coating;
c) a hydroxyl functional polymer adapted to co-react with the blocked isocyanate which is a hydroxyl functional acrylic copolymer or a hydroxyl functional polyester polymer
the binder comprising on a weight basis from 20% to 86% functional fluorocarbon copolymer (a), up to 60% hydroxyl functional polymer (c) and from 10% to 40% of the blocked isocyanate crosslinker (b)
which comprises the steps of mixing components (a), (b) and (c) in a high intensity mixer, extruding the mixture at a temperature above the melting point of the mixture but below the temperature at which the mixture crosslinks, cooling the extrudate and milling the extrudate so as to form a powder.

15. A process for producing a surface coating which comprises the steps of
(i) applying to a substrate a powder coating composition substantially free of organic solvent and water, the composition containing a thermosetting polymeric binder, comprising;
a) a hydroxyl functional fluorocarbon copolymer of copolymerised monomers comprising hydroxy alkyl vinyl ether and fluorolefin, where the fluorocarbon copolymer contains between 1 and 30 mole percent hydroxy alkyl vinyl ether, the fluorocarbon copolymer being produced by copolymerising said monomers in the absence of water;
b) a blocked isocyanate which is adapted to co-react with and crosslink the functional fluorocarbon copolymer (a) upon heat curing the paint coating;
c) a hydroxyl functional polymer adapted to co-react with the blocked isocyanate which is a hydroxyl functional acrylic copolymer or a hydroxyl functional polyester polymer
the binder comprising on a weight basis from 20% to 86% fluorocarbon copolymer (a), up to 60% hydroxyl

9

EP 0 371 599 A2

functional polymer (c) and from 10% to 40% blocked isocyanate (b), and
(ii) heating the substrate so as to melt the powder and so as to crosslink the composition.